# EUROPEAN PATENT SPECIFICATION

(11) **EP 2 323 311 B1**
(45) Date of publication and mention of the grant of the patent: **10.04.2013**
(21) Application number: 09014373.6
(22) Date of filing: 17.11.2009
(51) Int. Cl.: H04L 12/24, H04W 8/18, G06F 3/048, H04M 1/725

(54) **User interface for SIM card based applications**
Benutzerschnittstelle für SIM-kartenbasierte Anwendungen
Interface utilisateur pour applications à base de carte SIM

(43) Date of publication of application: 18.05.2011
(73) Proprietor: Simartis Telecom srl., Bucharest (RO)
(72) Inventor: Voiculescu, Alexandru, Mun. Bucharest Sec.1 (RO); Ionescu, Razvan-Mihai, Ors. Voluntari Jud. Ilfov (RO)
(74) Representative: Schmalz, Günther

(56) References cited:
- EP-A1- 1 276 339
- EP-A1- 1 962 478
- EP-A1- 2 076 003
- EP-A2- 0 891 066
- EP-A2- 1 331 559
- CA-A1- 2 267 549
- GB-A- 2 431 072
- US-A- 5 396 264
- US-A1- 2005 213 511
- US-A1- 2008 046 880
- US-B1- 7 587 484
- GERALD MADLMAYR ET AL: "The benefit of using SIM application toolkit in the context of near field communication applications", MANAGEMENT OF MOBILE BUSINESS, 2007. ICMB 2007. INTERNATIONAL CONFEREN CE ON THE, IEEE, PI, 1 July 2007 (2007-07-01), pages 5-5, XP031119380, ISBN: 978-0-7695-2803-8

## Description

### FIELD OF THE INVENTION

The invention is related to a user interface for SIM card based application programs offering beneficial services to a user.

### BACKGROUND OF THE INVENTION

SIM Application Toolkit (commonly referred to as STK) is a standard of the GSM system which enables the SIM to initiate actions which can be used for various value-added services. The "SIM Application Toolkit" consists of a set of commands programmed into the SIM card which define how the SIM should interact directly with the outside world and initiates commands independently of the handset and the network. This enables the SIM to build up an interactive exchange between a network application and the end user and access or control access to the network. The SIM also gives commands to the handset, such as display menu and ask for user input. STK has been deployed by many mobile operators around the world for many applications, often where a menu-based approach is required, such as Mobile Banking and content browsing. Designed as a single application environment, STK can be started at the initial power up of the SIM card and is especially suited to low level applications with simple user interfaces.

After a SIM has been delivered to the customer it can be difficult to change the STK applications and menus on the SIM. To do so either the SIM must be returned and exchanged for a new one which is costly and inconvenient or in some cases the applications can be updated over the air.

US 2005/0277432 relates to dynamic display generation for mobile communication devices. The document discloses a GSM phone having a SIM having a memory for data and applications, a processor and the ability to interact with the user. Current SIM cards typically have 16 to 64kb, which can be used to store a SIM toolkit framework, one or more SIM Toolkit application code and their associated data. The SIM Toolkit (STK) framework is the GSM Java Card runtime environment that is defined by ETSI TS 101.476 V8.5.0 (2002-09). An example of a static STK application is a phone directory stored in the SIM.

WO 01/52558 A2 refers to a method for operating a cellular broadcasting service consisting of a substantially continuous stream of mostly different content. There are provided interactive display messages for streaming display on at least one enabled personal cellular telecommunications device. Each interactive display message enables a subscriber to automatically activate a point-to-point transmission response mechanism integrally provided in a display message and actuable by a dedicated response means associated therewith.

US 2005/0060364 A1 refers to a method for use in a telecommunications network that includes a server and a wireless device. The wireless device has a wireless identity module operatively connected thereto. A communication between the server and the wireless identity module is established over a communications channel of the telecommunications network. A message identifying at least one of the status of the wireless device and a quality of service provided to the wireless device by the telecommunications network is sent to the server.

EP 1 962 478 refers to a method of reordering menu items in a SIM card where most frequently used items are placed at the top a first level menu.

### SUMMARY OF THE INVENTION

A method as further defined in claim 1, is provided which is implemented as an application program resident on a chip module. The method provides menu items to a user interface and includes determining the frequency of usage of the menu items by the end user, and providing at least some of the menu items to the user interface in a form depending on the determined frequency of their usages.

Other features are inherent in the methods and products disclosed or will become apparent to those skilled in the art from the following detailed description of embodiments and accompanying drawings.

### BRIEF DESCRIPTION OF THE DRAWING

Embodiments of the invention will now be described, by way of example, and with reference to the accompanying drawings, in which:
Fig. 1 shows an architecture including a mobile phone with a SIM card an application server communicating with the SIM card in the mobile phone via SMS according to some of the embodiments of the invention;
Fig. 2 illustrates a system in which a web interface is provided which is accessed by a plurality of operators and a plurality of content providers to provide content and/or services to a plurality of end users according to some of the embodiments of the invention;
Fig. 3 illustrates a further system having a web interface which is accessed by operators and content providers to provide content and/or services according to some of the embodiments of the invention;
Fig. 4 shows an application for creating a favourite menu directory according to some of the embodiments of the invention;
Fig. 5 illustrates an application for reordering menu items within a menu directory according to a user's access to the menu items according to some of the embodiments of the invention;
Fig. 6 illustrates a method of logging a user's activity within a menu structure and sending a logfile to a server program according to some of the embodiments of the invention;
Fig. 7 also illustrates a method of logging a user's activity within a menu structure and sending a logfile to a server program when starting a mobile phone according to some of the embodiments of the invention;

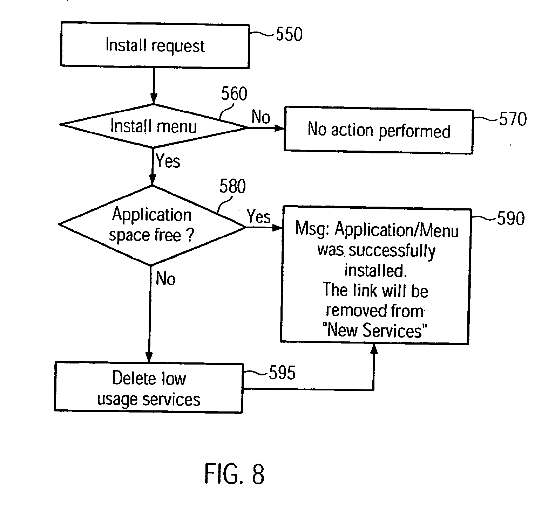

Fig. 8 illustrates an installation program for installing a new application or menu on a SIM card; and

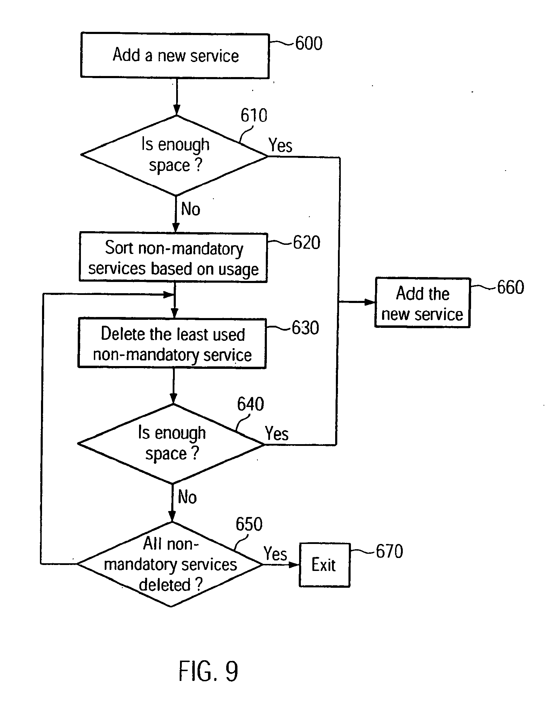

Fig. 9 illustrates a method, executed on a server program, of deleting space on a SIM card.

The drawings and the description of the drawings are of embodiments of the invention and not of the invention itself.

### DESCRIPTION OF THE PREFERRED EMBODIMENTS

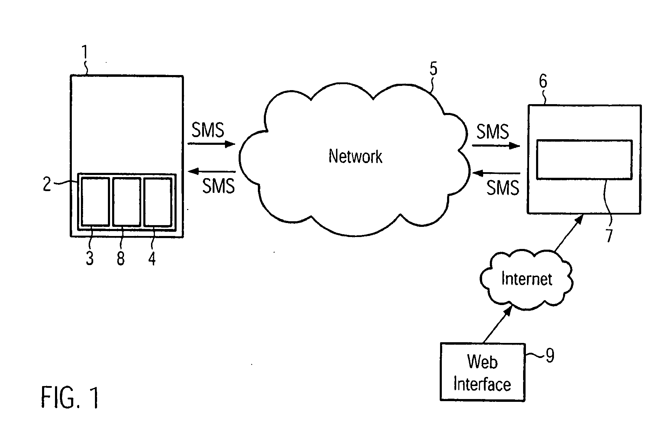

Fig. 1 shows a telecommunications system including a mobile phone 1 with a SIM card 2 communicating via a network with a server 6. However, before proceeding further with the description of Fig. 1 a few items of the embodiments of the invention will be discussed.

The present invention relates to a system, a set of methods and a number of programs for a SIM card within a communication device and for a server that manage, optimise and extend the usage of SIM resident services and structures and adapts them continuously to the user's behaviour and assures the triggering of SIM services or other operator or third party driven services for the user awareness. The invention combines more elements aiming to offer the mobile operator a new and optimised method to remotely and easily design, launch and promote new services for all GSM mobile users, using a single user interface for all mobile devices that is managed locally be the SIM application and in the background by the server application.

The system based on the computer programs installed in the network relates to the SIM card and on the server application. The server application will communicate bidirectionally with the SIM card via the mobile end device (e.g. mobile phone) on two bearers, SMS and BIP. The system is composed by an SIM Tool Kit Application and a server program that are communicating between themselves through SMS messages formatted according to the GSM standards.

The SIM Tool Kit applications described in the following address the following methods:
- a method of providing menu items to a user interface depending on their frequency of usage;
- a method of collecting statistics data;
- a method of optimizing menu directories;
- a method of installing new services.

The server program addresses the following methods:
- installing a program on a SIM card and deleting SIM space, if necessary;
- installing a program on a SIM card by sending the program to an application program stored on the SIM card;
- processing usage statistic data collected by a collector application program resident on the SIM card.

A method, not claimed in the present invention, is directed to a web interface, which is connected to a server providing content and/or a service to a chip module of an end user's mobile terminal device. The web interface has at least the functionalities of enabling distribution of content and/or creation of service structures to be provided to the at least one end user as a service/content structure. The web interface provides access to usage-related data of the at least one end user.

Of course, the term "web interface" as used herein does not only relate to a graphical user interface. Rather, the term relates to a computer program (in the sense of a web application) which implements the claimed features and functionalities. In particular, the web interface allows content and service providers, and operators to access a server on which content and services are provided to be distributed/transmitted to end users having mobile terminal devices with chip modules.

A "service/content structure" as used herein is any structure that contains service or content or service in combination with content. The term "content" refers to any type of content (text, images, sounds, etc.) provided to the user. A "service" is preferably a structure of menus and commands which will be interpreted by the SIM application and is executed on the mobile terminal device of the user. The meaning of "menu" and "command" herein refers to the terminology as usually used in the context of STK applications.

In some of the embodiments, usage-related data is preferably data concerning the user's consumption of content and services provided to him. This consumption data may be collected by an application on the user's mobile terminal device. In some of the embodiments, usage-related data is stored within usage profiles. This data may help an operator to identify the user's consumption behaviour and to provide new appropriate content and services based on the user content and service consumption.

The term "distribution of content and/or creation of service structures" refers to providing content and service to the server from where it is transmitted to the chip module of an end user's mobile terminal device. In some of the embodiments, the web interface user (typically an operator or content provider) is enabled to create and manage the content to be provided to the end user.

In the context of embodiments of the present invention, the term "mobile terminal device" generally relates to non location-related devices, which are equipped for wireless communication with another device. A mobile terminal device may communicate data via a mobile network, such as GSM, GPRS or UMTS. Hence, they can be used location-independent. This term also includes portable computers with mobile radio access or WLAN functionality or multi-functional devices having functions like mobile radio access, IP telephony, clock, camera, MP3-player, navigation device, game console. These devices are usually referred to as smartphones (e.g. Blackberrys) or PDA phones. A smartphone is a combination of a mobile phone and a personal digital assistant.

The term "chip module" as used herein refers to any exchangeable chip or storage card or a fixed installed hardware storage module for subscriber identifying data, e.g. for identification of a user in a network such as a mobile network.

In some of the embodiments, a chip module is a SIM card (subscriber identity module), which serves for identifying a user in mobile network. In a UMTS network, a SIM card is usually referred to as UICC card (Universal Integrated Circuit Card). However, the function is the same. Further, the term "chip module" also refers to an R-UIM (Removable User identity Module). This is a card that has been developed for CDMA mobile terminal devices, which extends the GSM SIM card to CDMA devices and networks.

It should be noted that in some of the embodiments, the functionality of distributing content and creating services is typically used by a service/content provider who wants to provide a user of a mobile terminal device with his information. The step of "providing access to usage-related data of the at least one user" is preferably used by an operator who is interested in the content and/or service consumption of the end user. Based on the user's content and/or service consumption, he can allow an appropriate content and/or service provider to provide his content and/or service to the user. Hence, operators and service and/or content provider may use the same web interface which integrates functionalities for both of them.

In some of the embodiments, a web interface is provided which is connected to a server providing content and/or a service to a chip module of an end user's mobile terminal device. The web interface is arranged to provide content and/or a service to at least one end user and at least one operator. The idea of the invention is to provide a three-sided architecture (three-party architecture) for three interacting parties. A first side is represented by at least one operator, a second side is represented by one or more content providers, and a third side is represented by the end users. The content/service providers may provide content/service via the web interface. The content/services are stored on the server and from there transmitted to a chip module of an end user's mobile phone.

In some of the embodiments, a web interface is provided wherein the content and/or service is provided to a group of end users to be defined and a group of operators to be defined. This means that a content/service provider may select the end users and the operators to which he wishes to provide its content and/or services.

In some of the embodiments, a web interface is provided which allows an operator having a higher degree of control over the web interface than a content and/or service provider to enable the latter to check the content and/or services before releasing the content and/or services to a larger number of end users. In other words, the web interface enables the operator to have the final say concerning the content and/or services to be provided.

A method is provided, which is implemented as an application program resident on a chip module. The method provides menu items to an end user interface and includes determining the frequency of usage of the menu items by the end user and provides at least some of the menu items to the user interface in a form depending on the determined frequency of their usages.

The term "frequency of usage of the menu items by the user" relates to the number of times a user actuates (clicks on) a menu item. Hence, the application determines that there are menu items that are more frequently used by the user than other menu items. Then, the method provides at least some of the menu items to a user interface in a form depending on the determined frequency of their usages. In some of the embodiments, a "user interface" is a graphical user interface and the menu items are displayed on a screen of a mobile phone. In other embodiments, a user interface is an interface which converts the menu items into a format which can be read by another program which displays it afterwards.

In some of the embodiments, providing at least some of the menu items to a user interface in a form depending on the determined frequency of their usages includes providing a favourite menu directory in which all menu items are aggregated that are more frequently used than a predetermined threshold. This means that the frequency of usage of a set of menu items is determined and furthermore, a predetermined threshold representing a minimum level of usage is also determined. All menu items that have been actuated more frequently than the predetermined threshold are aggregated into a favourite menu directory. The menu items that have been actuated less frequently than the predetermined threshold are not incorporated into the favourite menu directory.

In some of the embodiments, the predetermined threshold may be a certain number of clicks on the menu items and a menu item will be incorporated into the favourite menu directory after it has been actuated more than the predetermined number.

In other embodiments, the predetermined threshold is a fixed number of menu items within the favourite menu directory. This means, the favourite menu directory can only incorporate a certain number of menu items. After the fixed number is reached and another new menu item reaches a level of usage that is higher than the least used menu item within the favourite menu directory, this least used item will be deleted so that this new menu item can be added to the favourite menu directory. For example, the number of menu items (= the size of the favourite menu directory) may be fixed to ten menu items.

In some of the embodiments, the menu items are links to further application programs resident on the chip module, while in other embodiments, the menu items are entries of a telephone directory or any other content entries.

In some of the embodiments, providing at least some of the menu items to a user interface in a form depending on the determined frequency includes reordering the menu items depending on the determined frequency. In these embodiments, all or some of all menu items are reordered according to the determined frequency of their usage.

In some of the embodiments, the most frequently used menu item is placed at the first position in the menu directory, while less frequently used menu items are arranged below according to their usage.

In other embodiments, the last menu item accessed by the user is placed at the first position in the menu directory.

In some of the embodiments, the menu items are reordered according to their order values, an order value being based on the quotient of an access order and an access number of a menu item, the access order indicating the current order of the menu item and the access number indicating the number of accesses of the menu item.

Some of the embodiments refer to a method, implemented as an application resident on a chip module. The method collects and sends information and includes logging user's actions within a menu structure in a storage space of the SIM card, and sending at least a part of the logged information to a remote server program.

The method creates a log file in which the user's actions are stored. Logging a user's actions means, for example, registering the names of the SIM applications the end user uses, the period of time a user uses a certain application and also the inputs a user makes.

In some of the embodiments, a method is provided, implemented as an application program resident on a chip module, which optimizes menu directories. The method includes the step of merging repetitive menu items or menu structures together.

The method is capable of recognizing repetitive menu items or menu structures and merges them together. For example, the method recognizes that several entries in the telephone directory are identical, i.e. the end user has entered the same telephone several times. The method offers the user to delete the identical entries except one, such that the telephone directory is in a consolidated state again.

Some of the embodiments relate to a method, implemented as an application program resident on a chip module, of installing a service related to a menu item in a menu directory resident on the chip module. The method includes providing a set of menu items, related to service programs stored on a remote server, in a menu directory. An end user is enabled to select a menu item from the set of menu items. The service program related to the selected menu item is downloaded from the remote server, and the service program is installed on the chip module.

In some of the embodiments, it is verified whether there is enough space on the chip module before downloading the corresponding service program.

In some of the embodiments, the selected menu item is removed from the menu directory after installing the service program.

The menu directory is a dedicated menu directory containing menu items for all service programs that are offered to be downloaded.

The SIM application is able to communicate with a server application via SMS (Short Message Service). Short Message Service is a communication service standardized in the GSM mobile communication system, using standardized communications protocols allowing the interchange of short text messages between mobile telephone devices. SMS as used on modern handsets was originally defined as part of the GSM series of standards in 1985 as a means of sending messages of up to 160 characters (including spaces), to and from GSM mobile handsets. Since then, support for the service has expanded to include other mobile technologies such as ANSI CDMA networks and Digital AMPS, as well as satellite and landline networks. Most SMS messages are mobile-to-mobile text messages, though the standard supports other types of broadcast messaging as well.

Some of the embodiments refer to a method, executed on a server communicating with an application program resident on a chip module. The method installs a service program on a chip module. At first, it is checked whether there is enough space on the chip module. In case of insufficient free space on the chip module, space on the chip module is deleted. Then, the service program to be installed is installed on the chip module. This application, resident on the server, is a module for managing the space related to SIM applications or structures when installing a new structure or application on the chip module. The method deletes necessary menu structures or applications in order to accommodate the desired ones, in case of insufficient space on the chip module.

Some of the embodiments refer to a method, executed on a server communicating with an application program resident on a chip module, of installing a service program on a chip module. The method includes sending a service program, stored on the server, to an application program resident on the chip module upon request.

Some of the embodiments refer to a method, executed on a server communicating with an application program resident on a chip module. The method includes processing usage statistic data collected by a collector application program resident on the chip module.

Some of the embodiments of the invention refer to a chip module, on which an application is stored, which is arranged to execute the method of providing menu items to a user interface. The method includes determining the frequency of usage of the menu items by the user, and providing at least some of the menu items to the user interface in a form depending on the determined frequency of their usages.

Some of the embodiments of the invention refer to a chip module, on which an application is stored, which is arranged to execute a method of collecting and sending information. The method includes logging user's actions within a menu structure in a storage space of the chip module, and sending at least a part of the logged information to a remote server program.

Some of the embodiments of the invention refer to a chip module, on which an application is stored, which is arranged to execute a method of optimizing menu directories. The method includes merging repetitive menu items or menu structures together.

Some of the embodiments of the invention refer to a chip module, on which an application is stored, which is arranged to install a service related to a menu item in a menu directory resident on the chip module. The method includes providing a set of menu items, related to service programs stored on a remote server, in a menu directory, enabling an end user to select a menu item, downloading the service program related to the selected menu item from the remote server, and installing the service program on the chip module.

The invention offers the advantage to mobile operators buying large volumes of SIM cards to control user interaction of the programs onboard the SIM card. The invention offers the advantage to SIM card vendors which thanks to our solution(s) can take advantage of large memory as the method described by us -subject to an industrial application multioperator and multi end user - monetizes better this extra capacity.

Returning now to Fig. 1 which shows a communication system comprising a mobile phone 1 containing a SIM card 2 on which a static and dynamic STK application 3 is stored. The SIM card 2 communicates via the mobile phone 1 and a network 5 with a dynamic application server 6. The communication system supports communication between the mobile phone 1 and the application server 6. The system supports transmission of short messages between the dynamic application server 6 and the mobile phone 1 through the network 5. For ease of description, the term "SMS message" refers to a short message encoded using the ETSI TS 123.040 SMS protocol; the term "Dynamic STK message" refers to a short message encoded using a Dynamic STK communication protocol. The dynamic application server 6 may be configured to send bytecode commands in one or more Dynamic STK messages to the mobile phone 1, which uses the received bytecode commands to render a menu on its screen, or to perform other functions to provide information to or solicit information from the user of the mobile phone 1.

In the description of the examples to follow, the mobile phone 1 is a GSM phone having a SIM card 2. In an alternative version of the system, the mobile phone 1 may be a CDMA phone having an R-UIM, TDMA phone having a TIM, or the like. The SIM card 2 has memory (for data and applications), a processor and the ability to interact with the user. Current SIM cards typically have 16 to 64 kb of memory, which can be used to store a SIM Toolkit framework 4 and one or more SIM Toolkit application code and their associated data 3. The SIM Toolkit framework is the GSM Java Card runtime environment that is defined by ETSI TS 101.476 V8.5.0 (2002-09). The STK application may be implemented as text-based, menu-driven, single key response STK applications. The term "text-based, menu driven, single key response STK applications" generally refers to an application that provides a user interface in which a user can highlight a command or option from the menu provided on a screen of the mobile phone 1 and then press a single key to select the command or option.

In addition to the STK application 3, the SIM card 2 also has an application called the Dynamic Interpreter 8 which is configured to communicate with the dynamic application server 7 and to generate dynamic menus, alerts and text boxes, for example when Dynamic STK messages are received on the mobile phone 1.

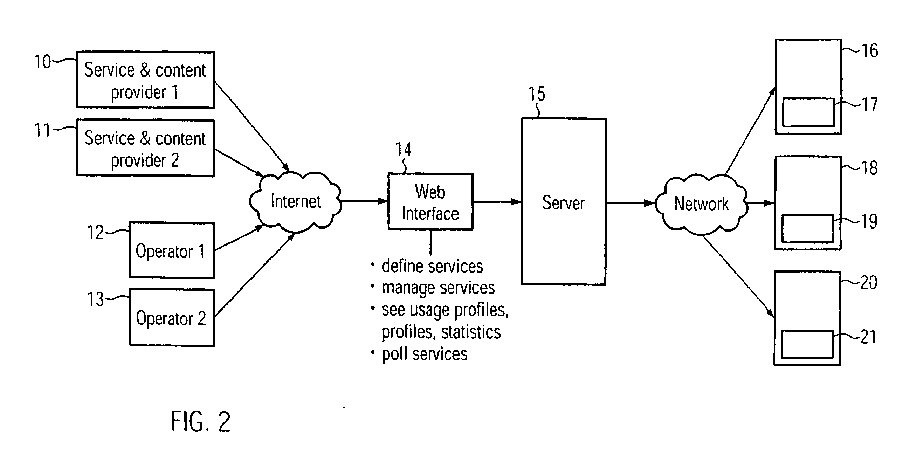

The application server 6 is further connected to a web interface 9, which will be explained in more detail in Fig. 2. This web interface 9 includes all the management and definition of new services and command libraries that allows the operator to define, change, download commands to a (selected) group of users or to all. By managing this interface, an operator can easily allow content and service providers to design in very simple and fast steps services that can be eventually polled by consumers. This enables a service to be tested with a small group of users before the service is released to a large group of users.

Fig. 2 shows a system in which both service and content providers 10, 11 and operators 1, 2 have access to a web interface 9 enabling them to define and manage services. In Fig. 2, there are two service and content providers 10, 11 who want to provide their services to a group of three users represented by their mobile phones 16, 18, 20, each containing a SIM card 17, 19, 21 having one or more STK applications on it. There are also two operators 12, 13 who have also access to the web interface 14. The web interface 14 enables the operators 12, 13 to define, change, download commands to group of users or to all. The operators 12, 13 are also able to see the usage profiles of different users, their usage statistics in a very intuitive and easy to use fashion. Since the operators 12, 13 manage the web interface 14, they can easily allow the content and service providers to design in very simple and fast steps services that can be eventually polled by the users 16, 18, 20. The best choices can be released for the large public. The operators 12, 13 are enabled to supervise content consumption which are stored in usage profiles. Since the operators 12, 13 can better understand the target users' consumption they can better select appropriate service and content providers 10, 11. While the operators 12, 13 have full control over the web interface 14, the service and content providers 10, 11 are restricted in their power. However, they have the ability to design and propose services and content to the operators 12, 13. The operators 12, 13 will be able to check the content/services provisioned and tested and will validate it before releasing it to their customers 16, 18, 20. The advantage for the content providers 10, 11 is to enjoy only one interface to a group of operators 12, 13. A group of operators 12, 13 can manage content distribution and directly usage performances, provisioning and centralised technical issues. The service and content providers 10, 11 can design a service in our new web interface in a very simple way. The web interface offers the advantage that a service can be used by segments of end users having a mobile phone with an appropriate SIM card.

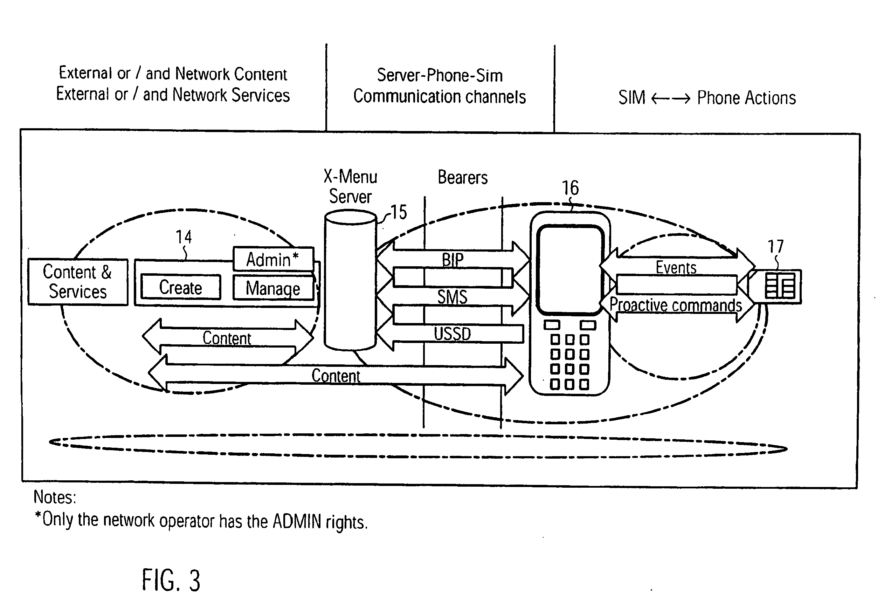

Fig. 3 again illustrates a system comprising a server 15 (X-Menu Server) communicating with a SIM card 17 of a mobile phone 16. There is provided a web interface 14, in which an end user may create and manage content and/or services to be provided to the user. While a content provider may access the X-Menu Server 15 via the web interface 14 and define its content, only a network operator has full administrative rights and may release the content and/or services to the end user. The X menu server 15 and the mobile phone communicate via BIP, SMS or USSD. The communication between an STK application on the SIM card 17 and the mobile phone 16 occurs via proactive commands. For example, a static STK application is a phone directory stored in the SIM card. The static STK application sends a STK "Select Item" proactive command which causes the mobile phone to render a menu of a phone directory on the screen of the mobile phone. When an end user selects an item, the mobile phone send a STK "user activity event" event download to the STK application and the static STK application executes an action associated with the user-selected item resulting in a retrieval of data from a memory of the SIM 17. The invention also provides the management and definition of new services and the command libraries that allows the user to define, change, download command to groups of users or to all. The end user, in particular the operator, is also enabled to see usage profiles, the reports and statistics and immediately change services in a very intuitive and easy to use fashion.

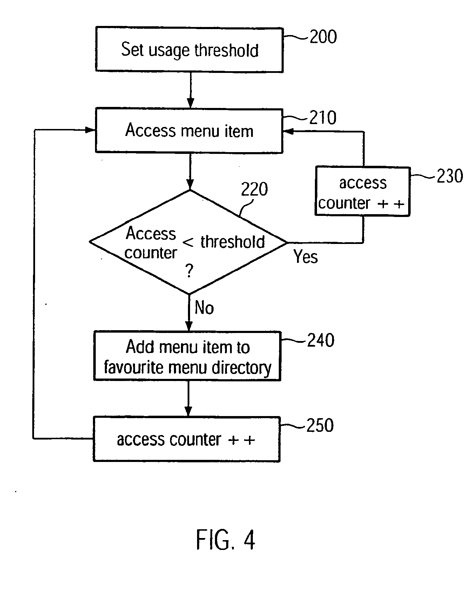

Fig. 4 illustrates a method of creating a favourite menu directory. The idea is to create a favourite menu directory which only includes frequently used menu items (e.g. links to an application on the application server 6). At 200, the user sets a usage threshold for different menu items. The usage threshold indicates the frequency a user has to access a certain menu item before it is added to a favourite menu directory. At 210, the end user accesses a menu item. At 220, it is compared whether the access counter of this menu item is smaller than the threshold determined by the user for this menu item. If this is case, the access counter for this menu item is incremented by one at 230, and the end user continues to access any menu items available. If the access counter is equal to the threshold value, the menu item accessed is added to the favourite menu directory at 240, and the access counter for this menu item is incremented by one at 250. The method returns to 210 and continues. The method continuously works as long as the user uses the menu structure of his mobile phone. However, since the access counters of the individual menu items continuously increase, the counter of any of the menu items may finally reach the threshold so that the size of the favourite menu directory will increase.

Hence, the user may also indicate a threshold which restricts the number of menu items in the menu directory. For example, the menu directory should only contain ten menu items. After ten menu items have been added and the frequency of usage of another menu item becomes greater than the least used menu item within the favourite menu directory, then the least used menu item will be deleted and the new menu item will be added to the favourite menu directory.

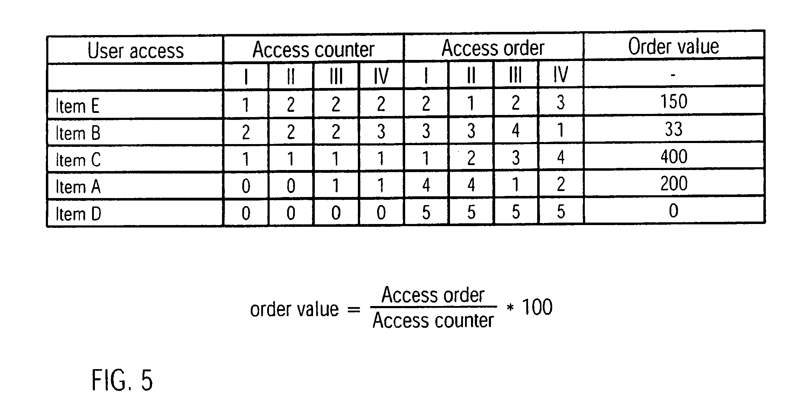

Fig. 5 shows a method of reordering menu items. Item reordering will be performed based on a value determined according to the following method. Each item is associated with two values, access counter and access order. In column "User access" 310, a list of menu items (A-E) is provided. In column "Access counter" 320, the number of accesses is shown at four consecutive points of time (I-IV). From point of time I to II, a user accesses item E. From point of time II to III, a user accesses item A, and from point of time III to IV, a user accesses item B. Column "Access order" 330 shows for each point of time, the access orders of the different menu items. At point of time I, the items have the following access order: C, E, B, A, D. After the user has accessed item E, item E is put on the top of the access order. The access order is then: E, C, B, A, D. After the user has accessed item A, item A is put on the top resulting in the order A, E, C, B, D. Finally, after the user has accessed item B, the access order will be B, A, E, C, D. The last item accessed will always have the access order value equal to 1. With each item access, the access counter will be incremented by 1. An order value will be determined by applying the following formula: order value = (access order / access counter) * 100. At the end of the accesses, item E has an access order of 3 and an access counter of 2 leading to an order value of 150. Item B has an access order of 1 and an access counter of 3, leading to an order value of 33. The items will be rearranged based on the order values obtained, in descending order. If the order values are the same, then the items will be ordered based on their access order value. The counters will never be reset. The counters will be decremented whenever a certain value (value can be configured by the operator) is reached. The application will always trigger the reorder mechanism when the user accesses the STK menu.

Fig. 4 refers to a statistics collector application. The collector is implemented as the SIM application and collects data about the user's behaviour, e.g. which application the user accesses at which time, how long a user uses an application, etc. The usage statistics are stored in a buffer as a list of accessed items/commands. The buffer will be unloaded (transmitted) to the server entity in four situations. (1) when a timer expires, (2) when the buffer is full, (3) at phone start and (4) when requested from the server.

All phones for which a timestamp cannot be read will unload the buffer every time the user exits the application. In this case, the application will not set the time. The timestamp of the log will be the timestamp from the server. At 400, the user accesses an application. At 410, the user's activity is logged in a log file. At 420, it is ascertained whether the user leaves the application. After he had left the application, the time is set and a timestamp is logged at 430. At 440, it is ascertained whether the timer has expired. If the timer has expired, the buffer is unloaded on the server at 450. At 460, it is ascertained whether the timestamp of the last log is before or at the same time of the timestamp of the log and if this timestamp is earlier or at the same time as the timestamp of the server AND if the timestamp of the server minus the timestamp of the last log is smaller or equal a predetermined period of time. If this is the case, the log is saved in the database with the timestamp of the log at 470. Otherwise, the log is saved in the database with the timestamp of the server at 480. If the timestamp of the server minus the timestamp of the last log is greater than X, the log will be saved in the database with the timestamp of the server. Further, a flag will be added which indicates that the time between timestamp of the server and the timestamp of the last log was very large

Fig. 5 refers to a situation where the buffer is unloaded on a server in case of starting the phone. At 500, the phone is started. At 510, the buffer is unloaded to the server. At 520, it is ascertained whether timestamp of the last log is earlier or at the same time as the timestamp of the log and if the timestamp of the log is earlier or at the same time as the timestamp of the server AND if the timestamp of the server-timestamp of the last log is smaller or equal a predetermined period time. If this is the case, the log is saved in database with timestamp of the log at 530. Otherwise, the log is saved in the database with the timestamp of the server at 540.

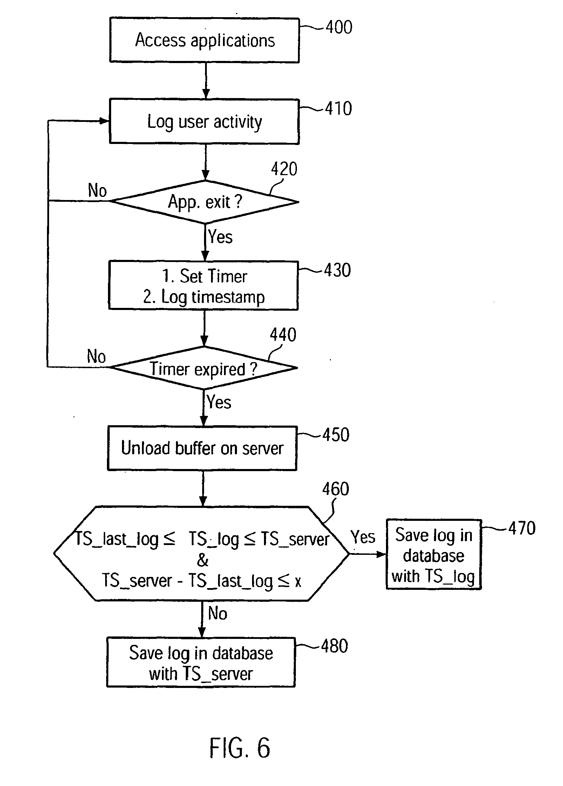

Fig. 6 illustrates a method, executed on a SIM card, of installing a new application. There is provided a "New Services" directory which holds a collection of links (menu items) referring to service programs stored on a remote server. Each link identifies a service which will be stored on a server. Every time a user executes one of the links placed in the "New Services" directory, a message will be displayed with information about the service to be installed. At 550, there is provided an install request which is activated by the user clicking on the link provided in the "New Services". At 560, the end user can choose to install the service associated with the link. If the user does not accept to install, no action will be performed and the end user remains in the menu from where the request was launched. If the end user accepts to install the link, then the application will continue with the installation. The end user is automatically placed outside the STK menu and he will not be able to access the STK until the service is downloaded. However, before downloading, it is ascertained at 580, whether the end user has enough space on the SIM card. If there is enough space on the SIM card, a message will appear which says that the application/menu was successfully installed at 590, and the link will be removed from the "New Services" directory after the download is complete. If the SIM card does not have enough space, then the application will start to remove the services with the lowest usage and whose service priority is set to non-mandatory at 595. After there is enough free space, a message will appear at 590 saying that the application/menu was successfully installed. The link will be removed from the "New Services" directory after the download is complete.

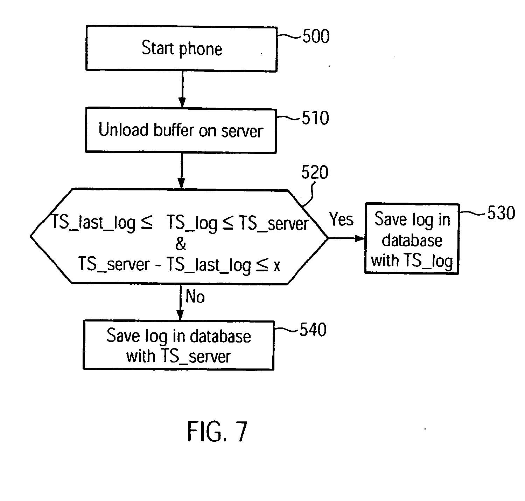

Fig. 7 shows a method, executed by a server program, of deleting a menu item (corresponding to a service) from a menu directory. When a new service is to be added in an existing menu directory and there is not enough space, the following method is used to free additional space. The method will delete the services configured as non-mandatory based on usage. The least used service will be deleted first. The operator can choose to activate or not the method described below when installing/uploading a service. Services marked as mandatory will not be removed. In the following method, the level of usage is determined based on the number of user requests generated.

At 600, a new service is to be added on the SIM card. At 610, it is ascertained whether there is enough space on the SIM card. If there is enough space, the service is added at 660. If there is not enough space, non-mandatory services are sorted based on their usage at 620. Usage may be determined based on the number of operator requests generated. At 630, the least used non-mandatory service is deleted. At 640, it is ascertained whether there is enough space on the SIM card. If there is now enough space, the new service is added now at 660. In case that there is not enough space, it is ascertained whether all non-mandatory services have been deleted at 650. If this is not the case, the least used non-mandatory service is deleted at 630. In case that all non-mandatory services have been deleted, the application exits.

## Claims

1. Method, implemented as an application program resident on a chip module (2), of providing menu items to a user interface, the method comprising:
determining the frequency of usage of the menu items by the end user, and
reordering and providing at least some of the menu items depending on the determined frequency of their usages, and **characterised in that** reordering comprises:
the menu items are reordered according to their order values, an order value being based on the quotient of an access order and an access number of a menu item, the access order indicating the current access order of the menu item and the access number indicating the current number of accesses of the menu item.

2. Method of claim 1, further comprising providing a favourite menu directory in which all menu items that are more frequency used than a predetermined threshold are aggregated.

3. Method of claim 2, wherein the number of menu items within the favourite menu directory is a fixed number; and after the fixed number is reached; the least used item will be deleted so that another menu item can be added.

4. Method of one of the previous claims, wherein the menu items are links to further applications programs resident on the chip module.

5. Method of one of the previous claims, further comprising:
logging an end user's actions within a menu structure in a storage space of the chip module, and
sending at least a part of the logged information to a remote server program.

6. A method of one of the previous claims, further comprising:
providing a set of further menu items, related to service programs stored on a remote server, in a menu directory;
enabling an end user to select one of the further menu items,
downloading the service program related to the selected further menu item from the remote server, and
installing the service program on the chip module.

7. The method of claim 6, further comprising verifying whether there is enough space on the SIM before downloading the service program.

8. The method of claim 6 or 7, wherein the selected further menu item is removed from the menu directory after installing the corresponding service program.

9. A SIM card (2), on which a SIM application is stored, which is arranged to execute a method according to any one of claims 1 to 8.

## Patentansprüche

1. Verfahren, ausgestaltet als ein, in einem Chipmodul (2) gespeichertes Anwendungsprogramm für das Bereitstellen von Menüpunkten an einer Benutzerschnittstelle, wobei das Verfahren umfasst:
Ermitteln von Benutzungshäufigkeiten der Menüpunkte durch einen Endbenutzer und Umstellen und Bereitstellung von wenigsten einigen der Menüpunkte in Abhängigkeit von ihrer ermittelten Benutzungshäufigkeit
**dadurch gekennzeichnet,**
**dass** die Menüpunkte entsprechend ihrer Ordnungswertes umgestellt werden, wobei der Ordnungswert auf dem Quotienten einer Zugriffsreihenfolge und der Zugriffsanzahl der Menüpunkte basiert, wobei die die Zugriffsreihenfolge der aktuellen Reihenfolge der Menüpunkte und die Zugriffsanzahl der aktuellen Anzahl von Zugriffen auf einen Menüpunkt entspricht.

2. Verfahren nach Anspruch 1 welches im Weiteren das Bereitstellen eines Favoritenmenüs umfasst, in welchem alle Menüpunkte gesammelt werden, deren Benutzungshäufigkeit einen vorgegebenen Schwellwert überschreitet.

3. Verfahren nach Anspruch 2, bei welchem die Anzahl der Menüpunkte in einem Favoritenmenüverzeichnis vorgegeben ist und nachdem die vorgegebene Anzahl erreicht ist, der am wenigsten benutze Menüpunkt gelöscht wird, so dass ein anderer Menüpunkt hinzugefügt werden kann.

4. Verfahren nach einem der vorangegangen Ansprüche, bei dem die Menüpunkte einer Verknüpfung zu weiteren Anwendungsprogrammen die in dem Chipmodul gespeichert sind, entsprechen.

5. Verfahren nach einem der vorangegangen Ansprüche, des Weiteren umfassend:
Erfassen der Bedienungshandlungen der Endbenutzer innerhalb einer Menüstruktur und Senden wenigstens eines Teils der erfassten Daten zu einem Remote-Serverprogramm.

6. Verfahren nach einem der vorangegangen Ansprüche, des Weiteren umfassend:
Zurverfügungstellung einer Menge von weiteren Menüpunkten in einer Menüstruktur welche sich auf Serviceprogramme beziehen, die auf einem Remote-Server gespeichert sind,
Ermöglichung dass ein Endbenutzer eines dieser weiteren Menüpunkte auswählt,
Herunterladen des Serviceprogramms von dem Remote-Server welches dem Menüpunkt entspricht, und
Installation des Serviceprogramms auf dem Chipmodul.

7. Verfahren nach Anspruch 6, des Weiteren umfassend, dass vor dem Herunterladen eines Serviceprogramms überprüft wird, ob genügend Speicherplatz auf der SIM-Karte vorhanden ist.

8. Verfahren nach Anspruch 6 oder 7, bei dem der ausgewählte Menüpunkt vom Menüverzeichnis entfernt wird, nachdem das entsprechende Serviceprogramm installiert ist.

9. SIM-Karte (2) auf welcher eine SIM-Anwendung gespeichert ist, welche dazu ausgestaltet ist, ein Verfahren nach einem der Ansprüche 1 bis 8 auszuführen.

## Revendications

1. Méthode, mise en oeuvre en tant que programme d'application résidant sur une puce (2), fournissant des options de menu à une interface utilisateur, cette méthode comprenant :
la détermination de la fréquence d'utilisation des éléments de menu par l'utilisateur final, et le réarrangement et la proposition d'une partie au moins des éléments de menu en fonction de la fréquence de leurs utilisations qui aura été déterminée, et caractérisée comme suit:
les éléments sont réarrangés à partir de leurs valeurs ordonnées, une valeur ordonnée résultant du rapport entre le numéro d'ordre et le numéro d'accès d'un élément de menu, le numéro d'ordre indiquant le numéro d'ordre actuel de l'élément du menu et le numéro d'accès indiquant le nombre actuel d'accès à l'élément du menu.

2. Méthode de la revendication 1, comprenant en supplément un répertoire de menu des favoris dans lequel sont regroupés les éléments de menu les plus fréquemment utilisés par rapport à un seuil prédéterminé.

3. Méthode de la revendication 2, où le nombre d'éléments de menu dans le répertoire de menu des favoris est un nombre fixe; et une fois que le nombre ainsi fixé est atteint, l'élément le moins utilisé est supprimé pour qu'un autre élément du menu puisse y être ajouté.

4. Méthode de l'une des revendications précédentes, où les éléments du menu sont des liens vers d'autres programmes d'application résidant sur la puce.

5. Méthode de l'une des revendications précédentes, comprenant en supplément:
la consignation des actions de l'utilisateur final à l'intérieur d'une structure de menu située dans un espace de stockage sur la puce, et l'envoi d'une partie au moins des informations consignées vers le programme d'un serveur distant.

6. Méthode de l'une des revendications précédentes, comprenant en supplément:
la fourniture d'un ensemble d'éléments de menu supplémentaires attachés à des programmes de service stockés sur un serveur distant présenté dans un répertoire de menus ;
la possibilité pour l'utilisateur final de sélectionner l'un des éléments de menu supplémentaires,
le téléchargement du programme de service attaché à l'élément de menu supplémentaire sélectionné à partir du serveur distant, et
l'installation du programme de service sur la puce.

7. La méthode de la revendication 6, comprenant en supplément la vérification qu'il existe un espace suffisant sur la carte SIM avant de télécharger le programme de service.

8. La méthode des revendications 6 ou 7, où l'élément de menu supplémentaire sélectionné est supprimé du répertoire de menu après installation du programme de service correspondant.

9. Une carte SIM(2) sur laquelle une application SIM est stockée, permettant l'exécution de n'importe quelle méthode décrite dans les revendications de 1 à 8.
